# EUROPEAN PATENT SPECIFICATION

(11) **EP 0 617 084 B1**
(45) Date of publication and mention of the grant of the patent: **05.08.1998**
(21) Application number: 94108917.9
(22) Date of filing: 11.06.1990
(51) Int. Cl.: C08L 27/12, C08K 5/00

(54) **Fluoroelastomer composition with improved bonding properties**
Fluorelastomerzusammensetzung mit verbesserten Hafteigenschaften
Composition de fluorélastomère avec propriétés modifiées de liaison

(30) Priority: 22.06.1989 US 369754
(43) Date of publication of application: 28.09.1994
(62) Divisional of application: 90306319.6
(73) Proprietor: MINNESOTA MINING AND MANUFACTURING COMPANY, St. Paul, Minnesota 55133-3427 (US)
(72) Inventor: Grootaert, Werner M.A., c/o Minnesota Mining and, St. Paul, Minnesota 55133-3427 (US); Kolb, Robert E., c/o Minnesota Mining and, St. Paul, Minnesota 55133-3427 (US); Millet, George H., c/o Minnesota Mining and, St. Paul, Minnesota 55133-3427 (US)
(74) Representative: Baillie, Iain Cameron

(56) References cited:
- EP-A- 0 335 705

## Description

### Introduction

This specification is divided out from parent application EP-A-0,404,411.

### Background

This invention relates to fluoroelastomer compositions comprising elastomeric copolymer of tetrafluoroethylene, vinylidene fluoride, and one or more hydrocarbon olefins and curing agents, said composition comprising a specified sulfonyl compound.

Silane compounds have been used to improve adhesion between polymer substrates and inorganic materials or substrates, such as metals, fiberglass and glass (see for example, "A Guide to Dow Corning Silane Coupling Agents", Form No. 23-012B-85, published by Dow Corning Corporation, Midland, Michigan). In some applications, compositions comprising silane compounds are hydrolyzed to their silanol form which may then react with the inorganic material, e.g., by reacting with hydroxyl moieties present on the inorganic material surface. Generally, the silane compound also has an organofunctional group which reacts with the polymeric material thus enhancing the bonding between the inorganic material and the polymer. Compositions comprising silane compounds have been successfully used as adhesion promoters with some fluoroelastomers, see for example, "Dynamar™ Bond Metal Bonding Agent - 5150", Brochure No. Y-IFE5150-2 (73.05)RI, published by the 3M Company, 1983. However, applicant has discovered that copolymers comprising tetrafluoroethylene, vinylidene fluoride, and one or more hydrocarbon olefins, cannot be bonded to inorganic substrates using only silane compounds to achieve good bonding or adhesion between inorganic substrates and the fluoroelastomers.

Applicants' invention improves the bonding or adhesion between curable fluoroelastomers comprising interpolymerized repeating units derived from vinylidene fluoride, tetrafluoroethylene, and hydrocarbon olefin (e.g., propylene) and inorganic substrates, such the metal cores, supports or inserts used in various molded seals such as shaft seals, valve stem seals, and gaskets.

In one aspect, this invention provides a curable elastomeric composition characterized in that it comprises the following components:
(A) fluoroelastomer gum comprising interpolymerized, repeating units derived from vinylidene fluoride, tetra-fluoroethylene and copolymerizable hydrocarbon olefin;
(B) polyhydroxy compound;
(C) organo-onium compound; and
(D) R_{f}SO₂CHR⁷SO₂R_{f}, where R⁷ is selected from H, Br, Cl, I, alkyl radicals having 1 to 20 carbon atoms, alkenyl radicals having 3 to 4 carbon atoms, aryl radicals having up to 10 carbon atoms and alkaryl radicals having up to 10 carbon atoms, and R_{f} is a monovalent fluoroaliphatic radical having 1 to 20 carbon atoms, provided that the carbon atom of the R_{f} which is directly bonded to the sulfur atom of the -SO₂- moiety is substituted with at least one strongly electronegative group; wherein the amount of fluoroaliphatic sulfonyl compound in the elastomeric composition is sufficient to result in greater adhesion of the elastomeric composition, after curing, to a surface coated with a primer composition comprising aminosilane compound than can be achieved between an elastomeric composition comprising (A), (B) and (C), after curing, and the surface coated with the primer composition comprising aminosilane compound.

There is also disclosed a combination comprising (1) the elastomeric composition in its cured state and (2) a substrate having a surface coated with the primer composition comprising aminosilane compound to which the cured elastomeric composition is bonded.

There is also disclosed a combination comprising the steps of:
(1) providing a mixture comprising the fluoroelastomer gum (A), polyhydroxy compound (B), organo-onium compound (C), R_{f}SO₂CHR⁷SO₂R_{f} (where R⁷ and R_{f} are defined above) (D), and acid acceptor e.g. calcium hydroxide,
(2) preparing a primer composition comprising aminosilane compound,
(3) applying the primer composition to the surface of a substrate,
(4) placing the coated substrate in a mold,
(5) filling a mold with the mixture prepared in step (1),
(6) curing the mixture, and
(7) removing the resulting molded article from the mold.

Preferred elastomeric compositions can additionally include one or more diorgano sulfur oxide compounds as co-curing agents.

There is also disclosed shaped or formed, cured articles made according to one of the methods described above.

Fluoroelastomers useful in this invention are fluorine-containing polymers comprising interpolymerized, repeating units derived from vinylidene fluoride, tetrafluoroethylene, and one or more, preferably one or two, copolymerizable hydrocarbon olefin monomers. Such fluoroelastomers are known in the art.

One subclass of such fluoroelastomers are saturated (i.e. essentially free of ethylene or acetylenic unsaturation), and are those consisting essentially of units derived from vinylidene fluoride, tetrafluoroethylene, and one or more copolymerizable hydrocarbon olefin monomers.

The hydrocarbon olefin monomers can be represented by those having the formula R'R'C=CR'R' wherein R' groups can be the same or different and can be selected from the group consisting of hydrogen and aliphatic radicals such as alkenyl and alkyl radicals. Where R' is alkenyl or alkyl, it can be straight chain or branched, and has one to four carbon atoms. Representative examples of olefin monomers are ethylene, propylene, and butene (e.g., isobutylene, butene-1, and butene-2, and butadiene). The molar ratios of the monomers used in making the fluoropolymer will be selected to achieve the properties (e.g., chemical resistance, high temperature stability, low temperature flexibility, and fluid, e.g. fuel, coolants and lubricants, resistance) desired in the cured polymer. The selection of such ratios will be within the skill of the art, based on the known relationships between the relative amounts of particular monomers and the physical properties of the copolymer. Generally, the copolymers of this class comprise 2 to 90 mole percent vinylidene fluoride, 5 to 65 mole percent tetrafluoroethylene, and 5 to 45 mole percent hydrocarbon olefin. Preferably they comprise 2 to 65 mole percent of vinylidene fluoride, 20 to 60 mole percent of tetrafluoroethylene, and 10 to 50 mole percent hydrocarbon olefin. Preferably, the hydrocarbon olefin is propylene.

Many of the fluoroelastomers or gums useful in this invention are described in the prior art, and can be prepared according to methods described in the prior art. For example Jap. Pat. No. Sho 60[1985]-19324, and Jap. Pat. No. Sho 60[1985]-19325 describe many of the fluoroelastomers useful in this invention and methods of preparing such fluoroelastomers.

Generally, the aminosilane compounds useful in this invention are di- or tri-alkoxy (e.g., methoxy, and ethoxy) or acetoxy silanes having one or two organo groups which are bonded directly to the silicon atom. At least one of said organo groups must have a primary amino moiety. It is believed that in use, the silane compound is hydrolyzed to a silanol (e.g., by adventitious moisture or by added water), that is, the silane compound's alkoxy and/or acetoxy moieties are hydrolyzed to hydroxyl moieties. These hydroxyl moieties are believed to react with a surface, and to react with the hydroxyl moieties on other silanol molecules (via condensation reactions), to result in polysiloxane molecules linked or bonded to a surface.

A class of the aminosilane compounds useful in this invention have the general formula:

(R¹O)ₐSi(R²)_{b} (I)

where a is 2 or 3, and preferably 3; b is 1 or 2, and preferably 1 and a + b is 4; R¹O is a monovalent, organic, hydrolyzable group, such as an alkoxy group having 1 to 8, and preferably 1 to 4, carbon atoms, e.g. methoxy, ethoxy or acetoxy groups; R² is a monovalent organic radical selected from the group consisting of alkyl, alkenyl, aryl radicals and combinations thereof such as arylalkyl and arylalkenyl radicals, wherein at least one of said R² groups contains a primary amino moiety. R² may be straight chain, branched, and, where sufficiently large, cyclic. R² may contain one or more catenary (i.e., backbone) hetero atoms such as sulfur, oxygen, and nitrogen, and it may be substituted with such hetero atoms. Generally R² will have from 1 to 20 carbon atoms, and preferably will have from one to 12 carbon atoms. Some of the R² groups can be represented by the general formula:

-(R³NH)_{c}-R⁴NH₂ (II)

where c is a number from 1 to 5, and preferably from 1 to 3; R³ and R⁴ moieties are divalent organic moieties which each may independently be selected from the group consisting of alkylene, alkenylene, arylene moieties and combinations thereof. R³ and R⁴ generally will have from 1 to 10 carbon atoms, and preferably from 1 to 4 carbon atoms. Examples of R³ and R⁴ moieties are propylene, ethylene, butylene, oxydiethylene or phenylene moieties.

Representative aminosilane compounds useful in this invention include:
3-aminopropyltriethyoxysilane, N-(2-aminoethyl-)3-aminopropyltrimethoxysilane, N-[2(vinylbenzylamino)ethyl]3-aminopropyltrimethoxysilane, 4-aminobutyltriethoxysilane, (aminoethylaminomethyl)phenethyltrimethoxysilane, N-(2-aminoethyl)-3-aminopropylmethyldimethoxysilane, N-2-aminoethyl-3-aminopropyltris(2-ethylhexoxy)silane, 6-(aminohexylaminopropyl)trimethoxysilane, p-aminophenyltrimethoxysilane, 3-(1-aminopropoxy)-3,3-dimethyl-1-propenyltrimethoxysilane, 3-aminopropyltris(methoxyethoxyethoxy)silane, 3-aminopropylmethyldiethoxysilane, 3-aminopropyltriethoxysilane, 3-aminopropyltrimethoxysilane, and ω-aminoundecyltrimethoxysilane.

The aminosilane compounds useful in this invention can be prepared by known methods such as those described in "Technical Bulletin Pigments", No. 75, published by the Degussa Corporation, Ridgefield Park, N.J., brochure no. Pig. 75 1-4-1288 DD, issued December 1988, pp. 5-6.

Many of the aminosilane compounds useful in this invention are commercially available, for example, from the Dow Corning Corporation, as DOW CORNING™ A-1100, Z-6020, Z-6026 and Z-6032 silanes. These products are described in "Selection Guide to Dow Corning Organosilane Chemicals", brochure no. 23-181E-85, and from Petrarch Systems, Bristol, Pennsylvania, as A0695, A0696, A0698, A0699, A0700, A0710, A0720, A0724, A0725, A0728, A0733, A0742, A0750, A0800, and A0808. These products are described in "SILICON COMPOUNDS Register and Review" published by Petrarch Systems, 1987, pp 105 to 106.

The primer compositions comprising aminosilane compound are solutions, dispersions or mixtures of aminosilane compound, alcohol and water. Primer compositions comprising a mixture of one or more aminosilane compounds can also be used in this invention. The selection of the alcohol will depend upon the solubility of the desired aminosilane compound in that alcohol, however, generally methanol and ethanol are useful solvents in this invention. Preferably, the alcohol will easily evaporate at room temperature to facilitate the formation of a dried coating of the primer composition on a surface of the substrate. One method of preparing the primer composition is to dissolve or disperse the desired quantity of aminosilane compound in a mixture comprising a portion of the total amount of alcohol comprising said primer composition and all of the water. The resulting mixture is then diluted with additional alcohol to achieve the desired final concentration of aminosilane. Typically, one part of this mixture would be diluted with an additional 3 to 10 parts by weight of alcohol. Before application to a substrate, the primer composition should be allowed to stand at room temperature for 15 seconds to 48 hours (depending upon the aminosilane compound) to permit the aminosilane compound to hydrolyze to its silanol form. The amount of water in the primer composition should be sufficient to result in the hydrolysis of a major portion of the hydrolyzable groups in the aminosilane compound to hydroxyl groups, and preferably it should be sufficient to result in the hydrolysis of essentially all of the hydrolyzable groups in the aminosilane compound. Excess water in the primer composition should be avoided because it can interfere with bonding between the substrate and the elastomer. Typically, alcohol will comprise 85 to 96.4 weight percent of the primer composition, water will comprise 0.05 to 5, and preferably 0.1 to 1.0 weight percent, and aminosilane compound will comprise 0.1 to 10.0 weight percent, and preferably 0.1 to 5, of the primer composition. Generally, when the specified fluoroaliphatic sulfonyl compound is compounded with the fluoroelastomer gum, the primer need not contain any of the fluoroaliphatic sulfonyl compound. Optionally, the primer composition may further comprise other silane compounds which are copolymerizable with the aminosilane compound but are not reactive with the fluoroaliphatic sulfonyl compound or the fluoroelastomer, e.g., vinyl triethoxysilane. One skilled in the art will recognize that the copolymerizable silane may be added to the primer composition to improve the strength, e.g. cohesive strength, of the dried primer composition coating.

Once prepared, the primer composition is applied to a surface (prepared according toaccording to procedures described herein) using any conventional method for applying coatings to substrates, e.g., immersion, spraying, painting, or curtain coating methods. After application, excess primer composition is allowed to drain off the surface of the substrate and the coating is allowed to dry either at room temperature (e.g., for 10 to 30 min.) or the coated substrate can be heated to 50 to 60°C, or higher, e.g., 120°C, for about 15 minutes. It is believed that in addition to aiding the drying of the primer coating the heat also aids the formation of a polysiloxane network which is bonded to the substrate surface. The dried primer coating thickness is generally about 1.25 to 7.5 µm (0.05 to 0.3 mil) thick.

The fluoroaliphatic sulfonyl compounds used in this invention is R_{f}SO₂CHR⁷SO₂R_{f}, where R⁷ is selected from H, Br, Cl, I, alkyl radicals having 1 to 20 carbon atoms, alkenyl radicals having 3 to 4 carbon atoms, aryl radicals having up to 10 carbon atoms; and alkaryl radicals having up to 10 carbon atoms and
R_{f} is a monovalent fluoroaliphatic radical having 1 to 20 carbon atoms. This fluoroaliphatic sulfonyl compound in combination with aminosilane compound increase adhesion between the cured elastomeric composition and a surface.

As mentioned R⁷ is selected from H, Br, Cl, I, alkyl having 1 to 20, or preferably 1 to 4 carbon atoms, alkenyl of 3 to 4 carbon atoms, aryl (e.g., phenyl, pyridyl, naphthyl, thienyl, benzthienyl) or alkaryl (of up to 10 carbon atoms); the alkyl, aryl and alkaryl may, if desired, be substituted, for example, by one or more halogens, highly fluorinated alkysulfonyl, carboxyl, alkoxycarbonyl, nitro, alkoxy, or acyloxy.

The carbon atom of the R_{f} which is directly bonded to the sulfur atom of the -SO₂- moiety must be substituted with at least one strongly electronegative or electron withdrawing group, and preferably with at least one fluorine atom or at least one highly fluorinated alkyl radical. For example, said carbon atom can be represented as follows: -CF₂-, -CF(CF₃)-, -C(CF₃)₂-, -CF(C₂F₅)-, -CFCl-, -CFH- and (CF=)CF-.

R_{f} is a specified monovalent fluoroaliphatic radical which is stable, inert, non-polar, oleophobic and hydrophobic. R_{f} can be straight chain, branched chain, and if sufficiently large, cyclic, or combinations thereof, such as alkylcycloaliphatic radicals. R_{f} will have 1 to 20 carbon atoms, preferably 4 to 20, and most preferably 4 to 12. The preferred compounds are those in which the R_{f} group is fully or substantially completely fluorinated, such as in the case where R_{f} is perfluoroalkyl, i.e. CₙF₂ₙ₊₁ , where n is 4 to 20 or perfluorocycloalkyl, i.e. CₙF₂ₙ₋₁ , where n is 5 to 20, or combinations of perfluoroalkyl and perfluorocycloalkyl, e.g.,

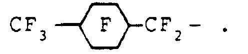

With respect to either R_{f} the skeletal chain or carbon atoms can include divalent oxygen, hexavalent sulfur, and/or trivalent nitrogen hetero atoms, each of which is bonded only to carbon atoms, such hetero atoms providing stable linkages between fluorocarbon portions of R_{f} and not interfering with the inert character of the radicals. Preferably where such heteroatoms are present, the skeletal chain does not contain more than one heteroatom for every two carbon atoms. An occasional carbon-bonded hydrogen atom, or chlorine atom may be present; where present, however, they preferably are present not more than once for every two carbon atoms in the chain. Where R_{f} is or contains a cyclic structure, such structure preferably has 5 or 6 ring member atoms, 1 or 2 of which can be said heteroatoms, i.e., oxygen and/or nitrogen. Generally, R_{f} radicals can contain 40 to 78 weight percent, preferably 50 to 78 weight percent fluorine. Examples of R_{f} radicals are fluorinated alkyl, e.g. C₆F₁₃-, C₈F₁₇-, and alkoxyalkyl, e.g. C₃F₇OCF₂-. Where R_{f} are designated as a specific radical, e.g. C₈F₁₇-, it should be understood that this radical can represent an average structure of a mixture, e.g. C₆F₁₃- to C₁₀F₂₁-, which mixture can also include branched structures.

The fluoroaliphatic disulfones useful in this invention can be prepared according to methods known in the art (see, for example, U.S. Pat. Nos. 3,776960 (Koshar et al), 4,053,519 (Koshar), 4,054,596 (Koshar), 4,069,233 (Koshar), 3,984,357 (Koshar) and 3,794,687 (Koshar)).

Representative fluoroaliphatic disulfone compounds useful in this invention include:

(C₆F₁₃SO₂)₂CH₂

Other known fluoroaliphatic disulfone compounds are described in U.S. Patent No. 4,115,295 (Robins et al) in column 7, lines 10-27.

The fluoroaliphatic sulfonyl compounds can be used singly or one or more of such compounds may be used in this invention.

The polyhydroxy compound which is admixed with the copolymer is one capable of functioning as a crosslinking agent for the copolymer. Such agents are well-known and are described in the art, e.g., U.S. Pat. Nos. 4,259,463 (Moggi et al.), 3,876,654 (Pattison), and 4,233,421 (Worm), and can include aromatic polyhydroxy compounds and aliphatic polyhydroxy compounds, and the derivatives of said compounds. Also, blends of polyhydroxy compounds may be used in this invention.

Representative aromatic, polyhydroxy compounds include the following: di-, tri-, and tetrahydroxy-benzenes, naphthalenes, and anthracenes, and bisphenols of the formula 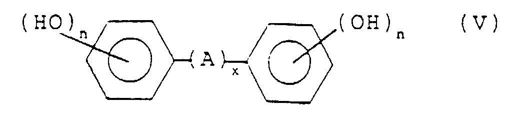 wherein A is a divalent aliphatic, cycloaliphatic, or aromatic radical of 1 to 13 carbon atoms, or a thio, oxy, carbonyl, sulfinyl, or sulfonyl radical; A is optionally substituted with one or more chlorine or fluorine atoms; x is 0 or 1; n is 1 or 2; and any aromatic ring of the polyhydroxyl compound can be optionally substituted with at least one atom of chlorine, fluorine, or bromine, or carboxyl, or an alkyl, or an acyl (e.g., a -COR⁸ where R⁸ is a C₁ to C₈ organic radical alkyl, aryl, or cycloalkyl group) radical. It will be understood from the above formula that the -OH groups can be attached in any position (other than number one, i.e., the carbon atoms where the A group is attached to the rings) in either ring. Specific aromatic polyhydroxy compounds include 4,4'-thiodiphenol, isopropylidene-bis(4-hydroxybenzene) (i.e., bisphenol A), hexafluoroisopropylidene-bis(4-hydroxybenzene), (i.e., bisphenol AF) and are described or illustrated in U.S. Pat. No. 4,233,421 (Worm).

Representative aliphatic polyhydroxy compounds include fluoroaliphatic diols, e.g. 1,1,6,6-tetrahydrooctafluorohexanediol, and others such as those described in U.S. Patent No. 4,358,559 (Holcomb et al.) and references cited therein. Representative polyhydroxy derivatives of polyhydroxy compounds which can be used as crosslinking agents are described in U.S. Patent No. 4,446,270 (Guenthner et al.), and include, for example, 2-(4-allyloxyphenyl)-2-(4-hydroxyphenyl) propane.

Preferred polyhydroxy compounds are aromatic polyhydroxy compounds having formula (IV) such as bisphenol A and bisphenol AF. A blend of two or more of the polyhydroxy compounds can be used in this invention. When changing from one polyhydroxy compound to another in a given composition, one skilled in the art will be able to select a curing time and temperature that will give a suitable rate of cure for a particular application.

The organo-onium compound which is admixed with the copolymer is capable of functioning as a vulcanization accelerator. An organo-onium compound is the conjugate acid of a Lewis base (e.g., phosphine, amine, ether, or sulfide) and can be formed by reacting a Lewis base with a suitable alkylating agent (e.g., an alkyl halide or acyl halide). This reaction results in the expansion of the valence of the electron donating atom of the Lewis base and a positive charge on the organo-onium compound. Many of the organo-onium compounds useful in this invention contain at least one heteroatom, i.e., a non-carbon atom such as N, P, S, O, bonded to organic or inorganic moieties. The organo-onium compounds suitable for use in this invention are known and are described in the art. See, for example, U.S. Patent Nos. 3,655,727 (Patel et al. ), 3,712,877 (Patel et al.), 3,857,807 (Kometani), 3,686,143 (Bowman), 3,933,732 (Schmiegel), 3,876,654 (Pattison), 4,233,421 (Worm), and 4,259,463 (Moggi et al.), European Patent Application Nos. 0182299A2 and 0120462A1; and also see West, A.C. and Holcomb, A.G. "Fluorinated Elastomers", Kirk-Othmer; Encyclopedia of Chemical Technology, Vol. 8, 3rd Ed., John Wiley & Sons, Inc., pp. 500-515 (1979). Mixtures of organo-onium compounds are also useful in this invention.

The organo-onium compounds include quaternary organo-onium compounds, such as those selected from the group consisting of ammonium, arsonium, phosphonium, stibonium, amino-phosphonium, phosphorane (e.g., triarylphosphorane), and iminium compounds, and sulfonium compounds.

One class of quaternary organo-onium compounds are organic compounds ionically associated with an anion, wherein at least one nitrogen, phosphorus, arsenic or antimony atom is covalently bonded to four organic moieties. Some of these quaternary organo-onium compounds broadly comprise relatively positive and relatively negative ions. A hetero atom such as phosphorus, arsenic, antimony or nitrogen atom generally comprising the central atom of the positive ion. These compounds are generally known as ammonium, phosphonium, arsonium, or stibonium salts or compounds, and preferably have the general formula: 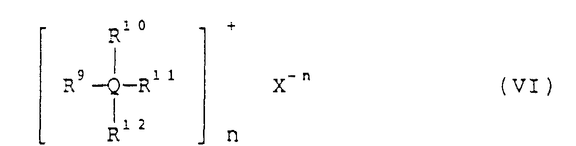 where Q is selected from the group consisting of nitrogen, phosphorous, arsenic, and antimony; X is an organic or inorganic anion (e.g., halide, sulfate, acetate, phosphate, phosphonate, hydroxide, alkoxide, phenoxide, bisphenoxide, etc.); n is equal to the valence of the anion X; and R⁹ , R¹⁰, R¹¹, and R¹² are selected from the group of radicals consisting of alkyl, aryl, alkenyl, or combinations thereof. R⁹, R¹⁰ , R¹¹ and R¹² can be substituted with chlorine, fluorine, bromine, cyano, -OR¹³, and -COOR¹³ moieties where R¹³ is selected from the group consisting of C₁ to C₂₀ alkyl, aryl, aralkyl, and alkenyl. Any pair of the R groups can be connected with each other and the Q atom to form a heterocyclic ring. However, in compositions where the copolymer is derived from vinylidene fluoride, tetrafluoroethylene and propylene monomer, the polyhydroxy compound is bisphenol AF, Q is phosphorous, X is a chloride anion, n is 1, and three of the groups, R⁹, R¹⁰, R¹¹, and R¹² are phenyl moieties, the remaining R group cannot be a benzyl moiety. A preferred class of quaternary organo-onium compounds has the general formula (VI) and at least one of the groups R⁹, R¹⁰, R¹¹ or R¹² is alkyl, or alkenyl.

In another class of quaternary organo-onium compounds, the nitrogen, phosphorus, arsenic or antimony atom may be a heteroatom in a cyclic structure, e.g., 8-benzyl-1,8-diazobicyclo[5,4,0]-7-undecenium chloride.

Another class of quaternary organo-onium compounds useful in this invention are amino-phosphonium compounds, some of which are described in the art, see for example, U.S. Patent No. 4,259,463 (Moggi et al). Another class of quaternary organo-onium compounds useful in this invention are phosphorane compounds, such as triarylphosphorane compounds. Some of the triarylphosphorane compounds are known and described in the art, see for example, U.S. Pat. No. 3,752,787 (de Brunner). Some of the triarylphosphorane compounds useful in this invention have the general formula 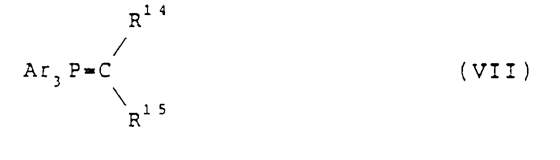 wherein Ar is aryl, selected for example, from phenyl, substituted phenyl, e.g. methoxyphenyl, chlorophenyl, tolyl, and other known aryl groups, e.g. naphthyl. R¹⁴ and R¹⁵ are selected from the group consisting of (1) separate groups selected individually from (a) hydrogen, methyl, ethyl, propyl, and carbalkoxy (C₁ to C₆ alkyl) in the case of R¹⁴, and b) carbalkoxy (C₁ to C₆ alkyl) cyano, and -CONH₂ in the case of R¹⁵; and (2) a single group which together with the carbon atom to which the single group is attached form a cyclic group selected from 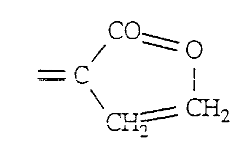 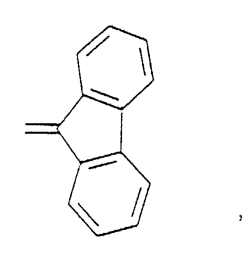 and

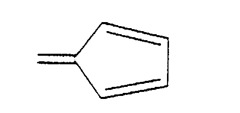

Another class of quaternary organo-onium compounds useful in this invention are iminium compounds. Some of the iminium compounds useful in this invention are organic compounds having the general formula: 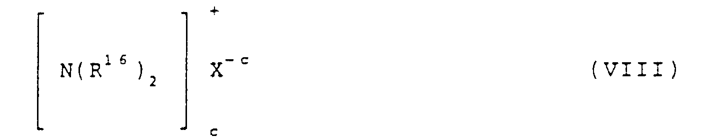 where R¹⁶ is a monovalent organic radical terminated with a non-carbon atom such as P, S, O, or N, such that the organic radical is covalently bonded to the nitrogen atom through the non-carbon atom, c is the valence of the anion X, e.g., 1 or 2, and X is an organic or inorganic anion, e.g., halide, hydroxy, sulfate, thiosulfate, nitrate, formate, acetate, cyanate, thiocyanate, tetraphenylborate, 2-mercaptobenzothiazolate, phosphate, phosphonate, alkoxide, phenoxide, bisphenoxide or perchlorate ions. The positive charge of the cation can be assigned to the N atom, but it can also equally be distributed between the two nitrogen and other hetero atom to which it is bonded.

Another class of iminium compounds useful in this invention are known and described in the art, e.g., European Patent Applications 182299A2 and 120462A1.

Representative quaternary organo-onium compounds include phenyltrimethylammonium chloride, tetrapentylammonium chloride, tetrapropylammonium bromide, tetrahexylammonium chloride, tetraheptylammonium bromide, tetramethylphosphonium chloride, tetramethylammonium chloride, tetrabutylphosphonium chloride, tributylbenzyl phosphonium chloride, tetrabutylammonium chloride, tetrabutylammonium bromide, tributylallylphosphonium chloride, tetraphenylphosphonium chloride, tetraphenylarsonium chloride, tetraphenylstibonium chloride, 8-benzyl-1,8-diazobicyclo[5.4.0]7-undecenium chloride, benzyltris(dimethylamino)phosphonium chloride, tributyl(2-methoxy)propyl phosphonium chloride, dibutyldiphenyl phosphonium chloride and bis(benzyldiphenylphosphine)iminium chloride.

Sulfonium compounds useful in this invention are known and described in the art, e.g., see U.S. Pat. No. 4,233,421 (Worm). A sulfonium compound is a sulfur-containing organic compound in which at least one sulfur atom is covalently bonded to three organic moieties having from 1 to 20 carbon atoms by means of carbon-sulfur covalent bonds. The organic moieties can be the same or different. The sulfonium compound generally is ionically associated with an anion. The sulfonium compounds may have more than one relatively positive sulfur atom, e.g. [(C₆H₅ )₂S⁺(CH₂ )₄S⁺(C₆H₅)₂] 2Cl⁻, and two of the carbon-sulfur covalent bonds may be between the carbon atoms of a divalent organic moiety, i.e., the sulfur atom may be a heteroatom in a cyclic structure.

A preferred class of sulfonium compounds are salts having the formula 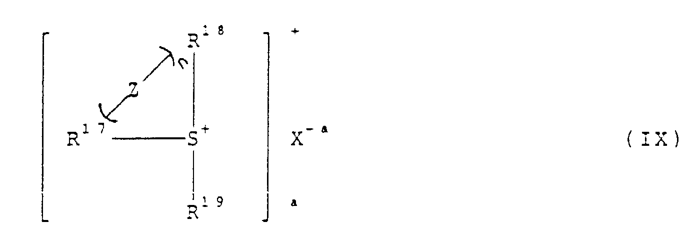 wherein R¹⁷, R¹⁸, and R¹⁹ can be the same or different, provided that at least one of such groups is aromatic. The R groups can be selected from the group consisting of aromatic radicals having 4 to 20 carbon atoms (e.g., substituted and unsubstituted phenyl, thienyl, and furanyl), and alkyl radicals having 1 to 20 carbon atoms. The alkyl radicals include substituted alkyl radicals (substituted for example with halide, hydroxy, alkoxy, aryl moieties). Z is selected from the group consisting of oxygen; sulfur; >S=O; >C=O; 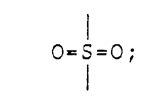 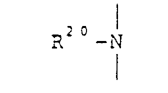 where R²⁰ is selected from the group consisting of aryl or acyl moieties (such as acetyl, benzoyl, etc.), a carbon-to-carbon bond, and 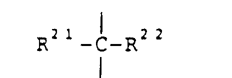 where R²¹ and R²² are selected from the group consisting of hydrogen, alkyl radicals having 1 to 4 carbon atoms, and alkenyl radicals having 2 to 4 carbon atoms. n is zero or 1, X is an inorganic or organic anion, and a is the valence of X. Examples of suitable representative X anions include halide, e.g. chloride and bromide, sulfate, bisulfate, nitrate, hydroxide, perchlorate, trifluoromethane sulfonate, acetate, benzene sulfonate, tetrafluoroborate, hexachlorophosphate, hexafluorophosphate, hexachlorostannate, hexafluoroarsenate, hexafluoroantimonate, phenoxide and bisphenoxide.

A further component in the composition is an acid acceptor. Acid acceptors can be inorganic or organic compounds. Organic acid acceptors include sodium stearate, and magnesium oxalate. However, acid acceptors are generally inorganic bases and include magnesium oxide, lead oxide, calcium oxide, calcium hydroxide, dibasic lead phosphite, zinc oxide, barium carbonate, strontium hydroxide and calcium carbonate. The preferred acid acceptors are magnesium oxide and calcium hydroxide. The acid acceptors can be used singly or in combination and preferably are used in amounts ranging from 2 to 25 parts per 100 parts by weight of the polymer.

Preferred elastomeric compositions contain one or more diorgano sulfur oxide compounds. Said diorgano compounds, when compounded with the other ingredients in the composition can function to increase the cure rate of the composition. Said diorgano compounds are known in the art and are described, for example, in U.S. Pat. No. 4,287,320 (Kolb). Said compounds, briefly described, contain at least one sulfur atom, one or two oxygen atoms bonded only to each said sulfur, and, additionally, two neutral organic radicals which bond directly to the sulfur atoms by single C-S bonds, and have the general formula (R²³)₂SOₓ wherein x is 1 or 2, and each R²³ is an organic radical. Each organic radical, R²³, may be the same or different and each radical may contain from one to twenty or more carbon atoms, although one to about eight carbon atoms are preferred, with a total of not more than about thirty carbon atoms associated with each sulfur atom. The two R²³ groups together may be a single alkylene group, forming with the sulfur atom a heterocyclic ring. The carbon skeletal chain of the R²³ groups may be linear, branched, or cyclic, may be aliphatic or aromatic, and may contain catenary hetero atoms, such as oxygen, in addition to carbon. Said chain may be substituted with, e.g., halide, alkoxy, -SOR, -SO₂R, carbalkoxy, oxo, hydroxyl, nitro, cyano, alkyl, aryl, or it may be unsubstituted. Such compounds include diorgano sulfoxides, (R²³)₂SO, and diorgano sulfones, (R²³)₂SO₂, and are described, for example in Basic Principles of Organic Chemistry, Roberts and Caserio, W.A. Benjamin Company, N.Y., N.Y., 1965, particularly pages 756-760, and Organic Syntheses, Vol. 1, pages 718-725, Vol. II, pages 1709-1715, Reinhold Publishing Co., N.Y., N.Y., 1957. Representative diorgano sulfur oxides include dimethylsulfone, tetramethylene sulfone, and bis(4-chlorophenyl) sulfone. Additional diorgano sulfur oxides are described in U.S. Pat. No. 4,287,320 (Kolb).

Fillers are often added to the polymers discussed above to modify properties of the cured elastomer. When a filler is employed it is added to the vulcanization recipe in amounts of up to 100 parts per hundred parts by weight of rubber, preferably between 15 and 50 parts per hundred parts by weight of the rubber. Examples of fillers which may be used are reinforcing thermal grade carbon blacks or non-black pigments of relatively low reinforcement characteristics such as clays and barytes.

The organo-onium compound, polyhydroxy compound and fluoroaliphatic sulfonyl compound can be introduced to the curable copolymer in the form of finely divided solids by milling said compounds into the copolymer gum stock. Thus mixed, the gum stock can generally be stored at room temperature for extended periods, e.g., up to two years or more. Prior to curing, an acid acceptor is milled into the gum stock containing organo-onium, polyhydroxy and fluoroaliphatic sulfonyl compounds, after which the storage life of the stock is more limited. Of course, all of the components of the curing system may be admixed prior to their incorporation into the elastomer without departing from the scope of this invention. Another method of introducing the components of this invention into the curable copolymer includes making a complex of the metal salt (e.g., sodium, calcium, etc.) of the polyhydroxy compound, and organo-onium compound and adding said complex along with fluoroaliphatic sulfonyl compound and, if desired, any additional polyhydroxy compound to the unvulcanized copolymer. Yet another method of introducing the components of this invention into the curable copolymer includes making a complex of the metal salt of both the polyhydroxy compound and the metal salt of the fluoroaliphatic sulfonyl compound with the organo-onium compound and adding the complexes to the unvulcanized copolymer. Said complexes are generally prepared by combining in reactive admixture equimolar amounts of sodium methoxide and polyhydroxy compound and fluoroaliphatic sulfonyl compound in a suitable solvent (e.g., methanol) to form the monosodium salt of the polyhydroxy compound and the monosodium salt of the fluoroaliphatic sulfonyl compound. The resulting salts are then reacted with an equimolar quantity of organo-onium compound to form a complex of the polyhydroxy compound and organo-onium compound and a complex of the fluoroaliphatic sulfonyl compound and the organo-onium compound.

The polyhydroxy and organo-onium compounds are present in the composition in such relative amounts as to provide the desired cure of the composition when mixed with acid acceptor. Representative proportions of components of the curing system are set forth below in Table 1. All amounts referred to therein are in parts per 100 parts by weight rubber abbreviated "phr" or in millimoles per hundred parts rubber, abbreviated "mmhr", unless otherwise indicated, the "rubber" means the elastomer copolymer or gum. These proportions are general ranges and the particular amount for each particular cure time and temperature will become apparent to those skilled in the art.

**Table 1**

| Formulation Ranges | |
|---|---|
| Component | Amounts |
| Acid acceptor | 0.5 to 40 phr |
| Organo-onium compound | 0.2 to 10 mmhr |
| Polyhydroxy compound | 0.3 to 10 mmhr |

When compounded into the gum, the amount of fluoroaliphatic sulfonyl compound should be sufficient, in combination with the aminosilane compound, to result in greater adhesion between the cured elastomer and the substrate surface than could be achieved without the fluoroaliphatic sulfonyl compound. Generally, the fluoroaliphatic sulfonyl compound is used at a level of 0.1 to 10 phr, and preferably 0.2 to 1 phr.

Useful elastomers are obtained within the aforementioned formulation limits, although elastomeric products having particularly desired properties may be obtained by varying the relative amounts of the components within the specified ranges. Preferably, compositions comprise 2.3 to 3.0 mmhr organo-onium compound and 2.0 to 6.0 mmhr polyhydroxy compound. Preferred compositions also contain diorgano sulfur oxide compound, most preferably tetramethylene sulfone and/or dimethyl sulfone, in a concentration range of 0.01 to 5 phr.

In some instances it may also be desirable to add other conventional adjuvants or ingredients, e.g. retarding agents, processing aids, reinforcing agents, plasticizers, and fillers, to the gum stock.

In accordance with this invention, the desired amount of fluoroaliphatic sulfonyl compound (if it is to be compounded with the fluoroelastomer gum), acid acceptor, organo-onium compound, polyhydroxy compound, diorgano sulfur oxide compounds, if any, and other conventional adjuvants or ingredients are added to the unvulcanized copolymer (i.e., gum stock) and intimately admixed therewith or compounded by employing any of the usual rubber mixing devices such as Banbury mixers, roll mills, or any other convenient mixing device.

For best results the temperature of the mixture on the mill should not rise above about 120°C. During milling it is necessary to distribute the components and adjuvants uniformly throughout the curable polymer. The curing process typically comprises extrusion or pressing the compounded mixture in a mold (e.g., a cavity or a transfer mold) around an inorganic substrate such as a metal insert, and subsequent oven curing. Pressing of the compounded mixture (press cure) is conducted at a temperature between 95°C and 230°C, preferably between 150°C and 205°C for a period of from 1 minute to 15 hours, usually from 5 minutes to 30 minutes. A pressure of between 700 kPa and 20,600 kPa, preferably between 3,400 kPa and 6,800 kPa is imposed on the compounded mixture in the mold. The molds first may be coated with a release agent, such as a silicone oil, and prebaked. The molded vulcanizate is then usually post cured (oven cured) at a temperature between 150°C and 315°C, usually at about 232°C for a period of from 2 hours to 50 hours or more depending on the cross-sectional thickness of the sample. In some applications, e.g., for thick sections, the temperature during the post cure is usually raised gradually from the lower limit of the range to the desired maximum temperature selected. The maximum temperature used is preferably about 232°C and is held at this value for about 4 hours or more.

Substrate surfaces should be prepared before coating with primer composition or bonding composition using conventional methods such as those described in Davis, D.J. and Kosmala, J.L., "A Practical Approach to Fluoroelastomer Adhesion to Metal", presented at the Energy Rubber Group Adhesion Symposia, Houston, Texas, May 30, 1985, and the "Chemlok™ 607" brochure no. DS10-6005J, published by the Lord Corporation in 1981. For example, nonmetallic surfaces should be thoroughly cleaned using an appropriate solvent. For example, glass may be cleaned using an alkaline bath. The preparation of metallic substrates depends to some extent upon the type of metal. However, where roughening of the substrate surface is desired, the substrate is first degreased using a suitable solvent such as trichloroethylene or Stoddard Solvent, then sandblasted (eg. using 354 µm to 250 µm (40 to 60 mesh) alumina grit) and then the sandblasted surface can again be degreased.

One major utility of the vulcanized, highly fluorinated elastomers of this invention lies in their use as shaft seals in automotive applications, gaskets, and the like, for containing fluids under pressure at elevated temperatures, as, for example, in hydraulic systems in aircraft, or as components of reactors in the processing of chemicals.

The following examples are offered to aid in a better understanding of the present invention.

### EXAMPLES

A terpolymer of 32.4 mole % vinylidene fluoride, 42.1 mole % tetrafluoroethylene and 25.5 mole % propylene was used in all of the following examples.

### REFERENCE EXAMPLES 1-6 and C1-C5

Compounded curable gumstocks containing various fluoroaliphatic sulfonamides were prepared. The formula for the compounded gumstock is summarized in Table 2. All amounts are expressed in parts by weight, millimoles per one hundred parts by weight of rubber (mmhr), or parts by weight per one hundred parts by weight of rubber (phr).

**Table 2**

| Curable gumstock ingredients | Amount |
|---|---|
| Terpolymer gum, parts | 100 |
| Tributyl(2-methoxy)propyl phosphonium chloride, mmhr | 2.3 |
| Bisphenol AF, mmhr | 3.7 |
| Tetramethylene sulfone, phr | 1.0 |
| Carbon black (ASTM N990), phr | 30 |
| Ca(OH)₂, phr | 6 |
| MgO (Maglite-D™), phr | 3 |
| Fluoroaliphatic sulfonamide, mmhr | 1 |

The bisphenol AF and tributyl(2-methoxy)propyl phosphonium chloride were complexed together before being incorporated into the gum. The complex was prepared by reacting 2.3 mmoles of sodium methoxide with 3.7 mmoles of bisphenol AF in methanol to form the monosodium salt of bisphenol AF. This monosodium salt was then reacted with 2.3 mmoles of tributyl(2-methoxy)propylphosphonium chloride. Sodium chloride formed and precipitated out of solution while the bisphenol-phosphonium complex remained in solution. The bisphenol-phosphonium complex, unreacted bisphenol AF, and the other ingredients described above were compounded on a two roll mill using standard methods.

The cure rheology of the samples was investigated by testing uncured, compounded mixtures using the Monsanto Oscillating Disk Rheometer (ODR) Model 100 S and the procedure described in ASTM D 2084-82 (with a micro die, no preheat, an oscillator frequency of 100 cpm and a 3° arc). All samples exhibited good cure.

A primer composition comprising 3-aminopropyltriethoxy silane was prepared by first dissolving 5 weight percent of 3-aminopropyltriethoxy silane in a solution comprising 0.5 weight percent water and 94.5 weight percent methanol. The silane was allowed to hydrolyze for approximately 4 hours. One part of this solution was then diluted with 3 parts by weight of methanol to form said primer. Carbon steel strips which had been freshly sandblasted, and washed two times with trichloroethylene and allowed to air dry were then dipped into the composition comprising hydrolyzed 3-aminopropyltriethoxy and allowed to air dry. The strips were then heated to about 50°C for about 30 to 45 minutes and allowed to cool to room temperature before the compounded elastomeric gum was applied to the sample and press cured at 177°C for 10 minutes at 2500 kPa.

After press curing the samples and permitting the cured vulcanizates to cool to room temperature the adhesion of the cured elastomer to the metal strip was evaluated. Adhesive failure, i.e. poor bonding or no bonding, between the cured elastomer composition and the metal strip was characterized by being able to peel the vulcanizate from the metal strip by hand using pliers or by the vulcanizate falling off the metal strip under the force of gravity. Cohesive failure, i.e., good bonding, between the cured elastomer composition and the metal strip was so strongly bonded to the metal strip that the rubber tore instead of peeling from the metal strip even with the use of pliers. Cohesive failure of the elastomer was indicative of a good bond between the cured elastomeric composition and the metal strip. The fluoroaliphatic sulfonamides used in these reference examples, their bonding quality, and their failure mode are summarized in Table 3.

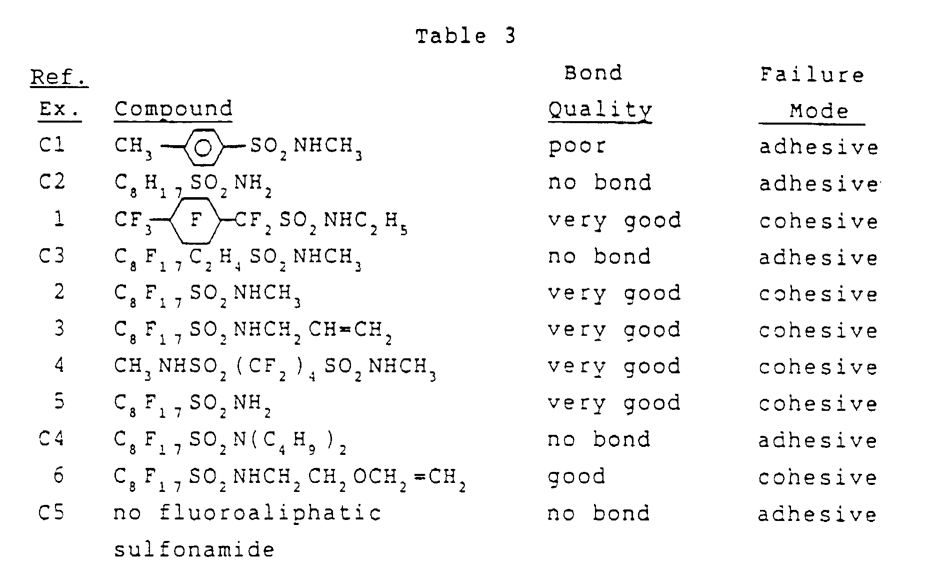

In Reference Examples C1 and C2 the elastomeric composition contained hydrocarbon sulfonamides and not the fluoroaliphatic sulfonamides of this invention. These vulcanizates showed adhesive failure forming only poor bonds or no bonds with the metal strip. Hence, the data shows that a sulfonamide must be fluoroaliphatic to be useful in improving adhesion between the cured fluoroelastomer and metal. Reference Example C3 shows the sulfur atom of the -SO₂- moiety must be bonded directly to a strongly electron withdrawing moiety, e.g. a -CF₂- moiety, to achieve a good bond. Reference Example C4 shows that the nitrogen atom in the fluoroaliphatic sulfonamide must be bonded to at least one hydrogen atom to achieve a good bond between the cured elastomeric composition and the metal strip.

### EXAMPLE 1

This example illustrates the use of fluoroaliphatic disulfone compounds as fluoroaliphatic sulfonyl compounds. An elastomeric composition was compounded according to the formula and procedure described in Reference Examples 1-6 except that 1 mmhr of a fluoroaliphatic disulfone, (C₆F₁₃SO₂)₂CH₂, was used instead of the fluoroaliphatic sulfonamide compounds used in Reference Examples 1-6.

Metal strips and a primer composition comprising 3-aminopropyltriethoxy silane were prepared according to the procedure described in Reference Examples 1-6, and the metal strips were coated in accordance with the procedure described in Reference Examples 1-6. A sample of the compounded elastomeric composition was then press cured against the coated metal strip in accordance with the procedure described in Reference Examples 1-6, and after the vulcanizate cooled to room temperature, the adhesion between the cured elastomeric composition and the metal strip was evaluated according to the procedure described in Reference Examples 1-6. Cohesive failure of the elastomeric composition was observed indicating that the presence of the fluoroaliphatic disulfone compound was effective at forming a good bond between the cured elastomeric composition and the metal strip.

## Claims

1. A curable elastomeric composition characterized in that it comprises the following components:
(A) fluoroelastomer gum comprising interpolymerized, repeating units derived from vinylidene fluoride, tetra-fluoroethylene and copolymerizable hydrocarbon olefin;
(B) polyhydroxy compound;
(C) organo-onium compound; and
(D) R_{f}SO₂CHR⁷SO₂R_{f}, where R⁷ is selected from H, Br, Cl, I, alkyl radicals having 1 to 20 carbon atoms, alkenyl radicals having 3 to 4 carbon atoms, aryl radicals having up to 10 carbon atoms and alkaryl radicals having up to 10 carbon atoms, and R_{f} is a monovalent fluoroaliphatic radical having 1 to 20 carbon atoms, provided that the carbon atom of the R_{f} which is directly bonded to the sulfur atom of the -SO₂- moiety is substituted with at least one strongly electronegative group; wherein the amount of fluoroaliphatic sulfonyl compound in the elastomeric composition is sufficient to result in greater adhesion of the elastomeric composition, after curing, to a surface coated with a primer composition comprising aminosilane compound than can be achieved between an elastomeric composition comprising (A), (B) and (C), after curing, and the surface coated with the primer composition comprising aminosilane compound.

2. A composition according to claim 1 further characterized in that component (D) is present in the elastomeric composition at a concentration of 0.1 to 10 phr.

## Patentansprüche

1. Vernetzbare elastomere Zusammensetzung, dadurch gekennzeichnet, daß sie folgende Komponenten aufweist:
(A) Fluorelastomerkautschuk mit interpolymerisierten Repetiereinheiten, deriviert von Vinylidenfluorid, Tetrafluorethylen und copolymerisierbarem Olefin;
(B) Polyhydroxy-Verbindung;
(C) Organoonium-Verbindung;
(D) R_{f}SO₂CHR⁷SO₂R_{f,} worin R⁷ ausgewählt wird aus H, Br, Cl, I, Alkyl-Radikalen mit 1 bis 20 Kohlenstoffatomen, Alkenyl-Radikalen mit 3 bis 4 Kohlenstoffatomen, Aryl-Radikalen mit bis zu 10 Kohlenstoffatomen und Alkaryl-Radikalen mit bis zu 10 Kohlenstoffatomen, wobei R_{f} ein einwertiges fluoraliphatisches Radikal mit 1 bis 20 Kohlenstoffatomen unter der Voraussetzung ist, daß das Kohlenstoffatom des R_{f}, das direkt an dem Schwefelatom des -SO₂- Teils gebunden ist, mit mindestens einer stark elektronegativen Gruppe substituiert ist; wobei die Menge der fluoraliphatischen Sulfonyl-Verbindung in der elastomeren Zusammensetzung ausreichend ist, um zu einer größeren Haftung der elastomeren Zusammensetzung nach dem Vernetzen an einer mit einer Primer-Zusammensetzung beschichteten Oberfläche zu resultieren, welche Primer-Zusammensetzung eine Aminosilan-Verbindung aufweist, als erzielt werden kann zwischen einer (A), (B) und (C) umfassenden elastomeren Zusammensetzung nach dem Vernetzen und der Oberfläche, die mit der Primer-Zusammensetzung beschichtet ist, welche Primer-Zusammensetzung eine Aminosilan-Verbindung aufweist

2. Zusammensetzung nach Anspruch 1, ferner dadurch gekennzeichnet, daß die Komponente (D) in der elastomeren Zusammensetzung mit einer Konzentration von 0,1 ... 10 phr vorliegt.

## Revendications

1. Composition élastomère durcissable caractérisée en ce qu'elle comprend les composants suivants :
(A) une gomme fluoroélastomère comprenant des motifs récurrents interpolymérisés dérivés du fluorure de vinylidène, du tétrafluoréthylène et d'une oléfine d'hydrocarbure copolymérisable ;
(B) un composé polyhydroxy ;
(C) un composé organo-onium ; et
(D) R_{f}SO₂CHR⁷SO₂R_{f}, où R⁷ est choisi parmi H, Br, Cl, I, des radicaux alkyle ayant de 1 à 20 atomes de carbone, des radicaux alcényle ayant de 3 à 4 atomes de carbone, des radicaux aryle ayant jusqu'à 10 atomes de carbone et des radicaux alcaryle ayant jusqu'à 10 atomes de carbone, et R_{f} est un radical fluoroaliphatique monovalent ayant de 1 à 20 atomes de carbone, à condition que l'atome de carbone du R_{f} qui est directement lié à l'atome de soufre du fragment -SO₂- soit substitué par au moins un groupe fortement électronégatif ; dans laquelle la quantité de composé sulfonyle fluoroaliphatique dans la composition élastomère est suffisante pour obtenir une adhérence plus grande de la composition élastomère, après durcissement, à une surface revêtue d'une composition primaire comprenant un composé aminosilane qui peut être obtenu entre une composition élastomère comprenant (A), (B) et (C), après durcissement, et la surface revêtue de la couche d'apprêt comprenant le composé aminosilane.

2. Composition selon la revendication 1, caractérisée en outre en ce que le composant (D) est présent dans la composition élastomère à une concentration comprise entre 0,1 et 10 phr.
